Europäisches Patentamt

European Patent Office

Office européen des brevets

(19)

(11) EP 0 486 980 B1

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(51) Int Cl.[6]: **G01N 25/52**, G01N 25/50

(21) Anmeldenummer: **91119595.6**

(22) Anmeldetag: **16.11.1991**

(54) **Verfahren und Vorrichtung zur Messung des Flammpunktes von Flüssigkeiten und Feststoffen**

Method and apparatus for measuring the flash point of liquids and solids

Méthode et appareil pour la mesure du point d'éclair de liquides et de matières solides

(84) Benannte Vertragsstaaten:
**DE FR GB IT NL**

(30) Priorität: **23.11.1990 AT 2382/90**

(43) Veröffentlichungstag der Anmeldung:
**27.05.1992 Patentblatt 1992/22**

(73) Patentinhaber: **Grabner, Werner, Dr.**
**A-1090 Wien (AT)**

(72) Erfinder: **Grabner, Werner, Dr.**
**A-1090 Wien (AT)**

(74) Vertreter: **Wallner, Gerhard, Dipl.-Ing.**
**c/o Waagner-Biro Aktiengesellschaft**
**Patentabteilung**
**Stadlauer-Strasse 54**
**Postfach 11**
**A-1221 Wien (AT)**

(56) Entgegenhaltungen:
**DD-A- 124 682**        **FR-A- 2 266 724**
**US-A- 3 293 904**

- **STAUB REINHALTUNG DER LUFT. Bd. 43, Nr. 10, Oktober 1983, DUSSELDORF DE Seiten 392 - 397; T. SZKRED: 'INERTISIERUNG VON STAUB/LUFT-GEMISCHEN MIT INHIBITOREN'**
- **PATENT ABSTRACTS OF JAPAN vol. 9, no. 273 (P-401)(1996) 30. Oktober 1985 & JP-A-60 119 453**

EP 0 486 980 B1

**Beschreibung**

Die Erfindung bezieht sich auf ein Verfahren und auf eine Vorrichtung zur Messung des Flammpunktes von Flüssigkeiten und Feststoffen, bei dem die zu untersuchende Substanz in eine beheizbare Meßkammer gebracht wird und die zur Bestimmung des Flammpunktes vorzunehmende Feststellung einer Enfflammung durch Messung des in der Meßkammer nach einem Zünden vorliegenden Druckes erfolgt, der bei einer Entflammung der zu untersuchenden Substanz zufolge der in der Meßkammer durch die Flamme herbeigeführten Temperaturerhöhung ansteigt.

Der Flammpunkt einer Substanz wird bei Transport- und Sicherheitsvorschriften verwendet, um entflammbare und explosive Materialien zu definieren und gibt über das Vorhandensein von leichtflüchtigen und entflammbaren Komponenten in einer schwer flüchtigen und nichtbrennbaren Substanz Auskunft.

Nach ASTM ist der Flammpunkt als die niedrigste Temperatur, korrigiert auf barometrischen Luftdruck von 101,3 kPA definiert, bei welcher sich durch das Anlegen einer Testflamme der Dampf der Probe entflammt, wobei eine Flamme entsteht, welche selbst über die Oberfläche der Probe wandert und mindestens zwei Drittel der Oberfläche bedeckt.

Der Flammpunkt einer Substanz wird unter Laborbedingungen bei Lufteinwirkung ermittelt.

Weltweit gibt es mehrere, von ASTM und ISO anerkannte Meßmethoden zur Messung des Flammpunktes. Dabei wird immer ein Probengefäß verwendet, welches mit Flamme oder elektrisch beheizt wird. Das offene Probengefäß ist kaum mehr für Prüfmessungen zulässig, da die leichtflüchtigen Komponenten abdampfen und zur Verbrennung nicht mehr beitragen können, wodurch das Meßergebnis verfälscht wird. Bei Prüfanordnungen mit geschlossenen Probengefäßen erfolgt die Heizung vom Gefäß (JP-A-60-119453) aus. Dadurch hinkt die Temperatur des Deckels immer nach, sodaß Kondensationserscheinungen und damit verbundene Flammpunktserhöhungen auftreten. Die Zündung des Gemisches erfolgt mit Zündflamme, Glühfaden, oder elektrischen Funken. Aus der DDR-PS 124.682 ist es bekannt, ein Probengefäß in einer Kammer mit Boden-, Wand- und Deckenbeheizung zu bestrahlen, wobei zur Vermeidung von örtlichen Überhitzungen des Gefäßes die drei Heizungsgruppen entsprechend leistungsgesteuert sind.

Derartige Leistungsregelungen sind problematisch, und die Messung selbst ist kompliziert.

Die Detektion eines Flammpunktes erfolgt entweder manuell durch optische Beobachtung oder automatisch über eine Temperaturmessung (Temperaturanstieg infolge der Verbrennung) oder eine Ionisationsmessung (Veränderung des Ionisationszustandes des Gases infolge Verbrennung). Der Nachteil dieser Detektion ist bei manueller Beobachtung die subjektive Beurteilung der Flammengröße und bei der automatischen Erfassung durch Wärme oder Ionisation die schlechte Reproduzierbarkeit der Methode, da die Flammengröße kaum erfaßt werden kann.

Ziel der Erfindung ist ein automatisierbares Verfahren zur Messung des Flammpunktes, welches sich gut zum betriebsmäßigen Einsatz eignet und genaue und reproduzierbare Meßergebnisse liefert. Die Erfindung soll weiter auch eine Vorrichtung schaffen, welche eine einfache Durchführung des erfindungsgemäßen Verfahrens und das Erzielen einer hohen Meßgenauigkeit und guten Reproduzierbarkeit erlaubt.

Das erfindungsgemäße Verfahren ist dadurch gekennzeichnet, daß die Beheizung der geschlossenen Meßkammer über die Meßkammerwandung oberhalb der zu untersuchenden Substanz erfolgt und damit die Temperatur der zu untersuchenden Substanz immer niedriger als die Oberfläche der das freie Gasvolumen einschließenden Kammer ist. Die erfindungsgemäße Vorrichtung zur Durchführung des Verfahrens ist dadurch gekennzeichnet, daß der Deckel beheizbar und mit einer von unten anpreßbaren Meßwanne beinhaltend die Meßsubstanz lösbar verbunden ist, deren Temperatur zwingend niedriger ist als die Temperatur des Deckels. Insbesondere ist der beheizbare Deckel mit der elektrischen Zündung, der Druckmeßeinrichtung und zwei Temperaturfühlern jeweils für den Deckel und den Inhalt der Meßkammer versehen ist und ist die Meßwanne zur Entleerung, Reinigung und Füllung vom Deckel abnehmbar angeordnet. Vorzugsweise ist die Druckmeßeinrichtung in an sich bekannter Weise als piezoresitiver Druckgeber ausgebildet.

Es ist ein wesentlicher Vorteil dieses Verfahrens, daß die gemessene Druckerhöhung nicht nur von der Temperatur des verbrannten Gases sondern auch vom Volumen der Flamme abhängt. Dadurch kann durch Einstellung einer Schwelle für die Druckerhöhung die volumsmäßige Größe der Flamme erfaßt werden.

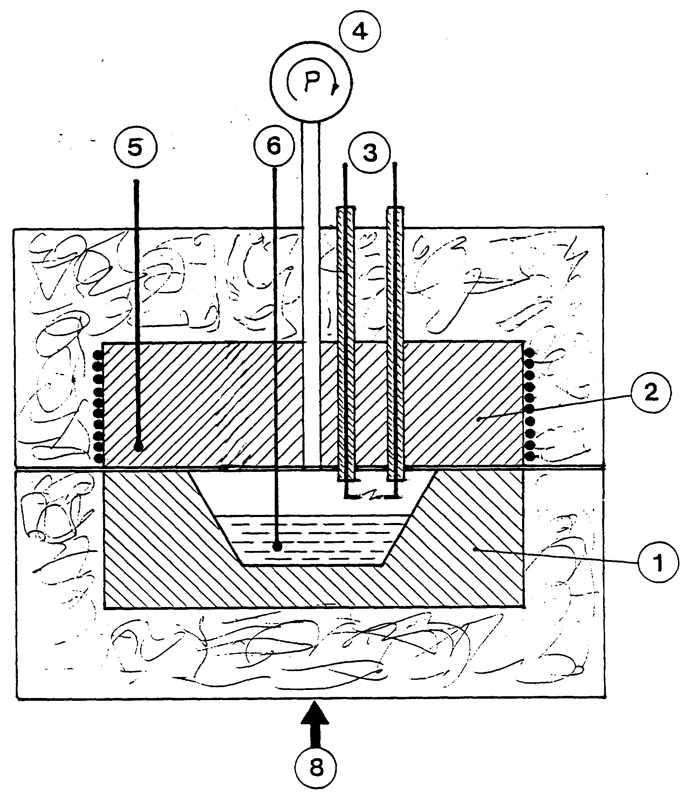

In der Zeichnung ist die erfindungsgemäße Vorrichtung beispielsweise und schematisch dargestellt.

Der Deckel 2 und die Meßwanne 1 werden zwecks guter Wärmeleitung aus Aluminium gefertigt. Die Temperaturmessung und Regelung erfolgt über einen, mit dem Deckel thermisch gut gekoppelten Temperaturfühler 5. Am elektrisch beheizten Deckel 2, welcher fest im Gerät thermisch isoliert eingebaut ist, befinden sich zwei Elektroden 3 für die elektrische Zündung.

Die Zündspitzen der Elektroden befinden sich ca. 2 mm über der Oberfläche der zu messenden Substanz. Der Zündfunke wird mit einer handelsüblichen Zündspule elektrisch erzeugt. Weiters ist im Deckel 2 ein zweiter Temperaturfühler 6, welcher direkt in die Meßsubstanz ragt, eingebaut. Damit wird die Temperatur der Meßsubstanz genau erfaßt und gilt dann als Meßwert für den Flammpunkt.

Hauptgegenstand der Meßeinrichtung ist die Erfassung des Flammpunktes. Es wird davon ausgegangen, daß jede Verbrennung mit einer Temperaturerhöhung verbunden ist. Im Gegensatz zur herkömmlich angewendeten Temperaturmessung wird die Druckerhöhung infolge der Verbrennungstemperatur innerhalb der Meßkammer herangezogen.

Wird eine Verbrennungstemperatur von ca. 1000° C angenommen, so erhöht sich der Druck bei gleichem Volumen nach der Gasgleichung

$$p \times v / T = const$$
$$p2 / p1 = T2 / T1$$

p2   Druck bei 1000° C
p1   Druck bei Meßtemperatur (101,3 kPa)
T2   Absolute Verbrennungstemperatur (1000 + 273)
T1   Absolute Meßtemperatur (tm + 273)

Bei einer Meßtemperatur von 100° C entspricht das einer Druckerhöhung auf ca. 350,0 kPa.

Das vorgegebene Volumen an verbranntem Gas mit hohem Druck verteilt sich auf das gesamte Gasvolumen in der Meßkammer. Daraus kann der eigentliche Druckanstieg in der Kammer ermittelt werden. Eine Korrektur des erforderlichen Druckanstieges über die Meßtemperatur ist einfach möglich und für genaue Bestimmungen auch erforderlich.

Unter der Annahme, daß die Flamme 20% des freien Gasvoluments einnimmt, ergibt sich eine endgültige Druckerhöhung von ca. 50 kPa. Dies ist eine Meßgröße, welches mit großer Genauigkeit gemessen werden kann.

Zur genauen Erfassung des Druckanstieges wird vorzugsweise eine als piezoresistiver Druckgeber ausgebildete Druckmeßeinrichtung 4 verwendet, welche über eine Schlauchleitung mit der Meßkammer verbunden ist.

Meßvorgang

Die zu messende Substanz, vorwiegend eine Flüssigkeit, wird in die Meßwanne 1 in einer vorgegebenen Menge eingefüllt. Die Meßwanne 1 wird entweder manuell oder automatisch mittels Anpreßvorrichtung 8 an den heizbaren Deckel 2 angedrückt.

Der Meßvorgang wird gestartet, indem der Deckel 2 auf eine vorgegebene Temperatur, welche mit Sicherheit unter der erwarteten Flammpunktstemperatur liegt, aufgeheizt wird. Die Überwachung und Meßung der Temperatur erfolgt über den Temperaturfühler 5.

Durch den Temperaturkontakt der Meßwanne 1 mit dem Deckel 2 wird auch diese mit aufgeheizt. Ihre Temperatur bleibt aber unter der Temperatur des Deckels 2.

Nach einer Wartezeit für den Temperaturangleich der Meßwanne 1 an den Deckel 2 wird die Temperatur des Deckels 2 langsam weiter erhöht und in konstanten Temperaturabständen eine Zündung über die Elektroden 3 vorgenommen. Unmittelbar nach der Zündung wird der Druckanstieg über die Druckmeßeinrichtung 4, welche vorzugsweise als piezoresistiver Druckgeber ausgebildet ist, in der Meßkammer gemessen. Die Flammpunkttemperatur gibt der Temperaturfühler 6 an. Die Meßkammer wird vom Meßgefäß 1 bzw. Volumen der zu messenden Substanz und dem freien Raum unter dem Deckel bestimmt.

Patentansprüche

1. Verfahren zur Messung des Flammpunktes von Flüssigkeiten und Feststoffen, bei dem die zu untersuchende Substanz in eine geschlossene Meßkammer gebracht wird und die zur Bestimmung des Flammpunktes vorzunehmende Feststellung einer Enfflammung durch Messung des in der Meßkammer nach einem Zünden vorliegenden Druckes erfolgt, der bei einer Entflammung der zu untersuchenden Substanz zufolge der in der Meßkammer durch die Flamme herbeigeführten Temperaturerhöhung ansteigt, dadurch gekennzeichnet, daß die Beheizung der geschlossenen Meßkammer über die Meßkammerwandung oberhalb der zu untersuchenden Substanz erfolgt und damit die Temperatur der zu untersuchenden Substanz immer niedriger als die Oberfläche der das freie Gasvolumen einschließenden Kammer ist.

2. Vorrichtung zur Messung des Flammpunktes von Flüssigkeiten und Feststoffen in einer Meßkammer, welche aus einer Meßwanne (1) sowie einem Deckel (2) gebildet ist und welche mit einer elektrischen Zündung (3), Temperaturfühler (5,6), einer Druckmeßeinrichtung (4) sowie mit einer Anpreßeinrichtung (8) zur dichten Verbindung von Meßwanne (1) und Deckel (2) versehen ist, dadurch gekennzeichnet, daß Mittel zum Beheizen des Deckels (2) vorhanden sind und der Deckel (2) mit einer von unten anpreßbaren Meßwanne (1) beinhaltend die Meßsubstanz lösbar verbunden ist, deren Temperatur zwingend niedriger ist als die Temperatur des Deckels (2).

3. Vorrichtung nach Anspruch 2, dadurch gekennzeichnet, daß der beheizbare Deckel (2) mit der elektrischen Zündung (3), der Druckmeßeinrichtung (4) und zwei Temperaturfühlern (5,6) jeweils für den Deckel (2) und den Inhalt der Meßkammer versehen ist und daß die Meßwanne (1) zur Entleerung, Reinigung und Füllung vom Deckel (2) abnehmbar angeordnet ist.

4. Vorrichtung nach Anspruch 2 oder 3, dadurch gekennzeichnet, daß die Druckmeßeinrichtung (4) in an sich bekannter Weise als piezorestiver Druckgeber ausgebildet ist.

## Claims

1. A process for measuring the flashpoint of liquids and solids, in which the substance under examination is delivered into a sealed measuring chamber and the detection of inflammation for the purpose of determining the flashpoint is carried out by measuring the pressure, which is present in the measuring chamber after an ignition and which increases in the event of inflammation of a substance under investigation due to an increase in temperature caused by the flame in the measuring chamber, **characterized in that** the sealed measuring chamber is heated via the measuring-chamber wall above the substance under investigation, so that the temperature of the substance under investigation is always lower than the surface of the chamber which encloses the free gas volume.

2. An apparatus for measuring the flashpoint of liquids and solids in a measuring chamber, which is composed of a measuring trough (1) and a cover (2) and which is provided with an electrical ignition (3), a temperature sensor (5, 6), a pressure-measuring device (4) and a press-on device (8) for a tight connection between measuring trough (1) and cover (2), **characterized in that** means for heating the cover (2) are provided and that the cover (2) is detachably connected to measuring trough (1) containing the measuring substance and the temperature of which is naturally lower than the temperature of the cover (2).

3. An apparatus according to Claim 2, **characterized in that** the heatable cover (2) is provided with an electrical ignition (3), the pressure-measuring device (4) and two temperature sensors (5, 6) for the cover (2) and the contents of the measuring chamber respectively, and that the measuring trough (1) is removable from the cover (2) for the purpose of emptying, cleaning and loading.

4. An apparatus according to Claim 2 or 3, **characterized in that** the pressure-measuring device (4) is in a conventional manner designed as a piezo-resistive pressure means.

## Revendications

1. Procédé pour mesurer le point d'éclair de liquides et de matières solides dans lequel la substance soumise à l'essai est placée dans une chambre de mesure fermée et la direction d'une inflammation, servant pour la détermination du point d'éclair, a lieu par la mesure de la pression régnant dans la chambre de mesure après un allumage, pression qui, lors d'une inflammation de la substance soumise à l'essai, s'élève par suite de l'augmentation de la température produite par la flamme dans la chambre de mesure, caractérisé en ce que le chauffage de la chambre de mesure fermée a lieu par l'intermédiaire de la paroi de la chambre de mesure se trouvant au-dessus de la substance soumise à l'essai et que de ce fait la température de la substance soumise à l'essai est toujours inférieure à celle de la surface de la chambre enfermant le volume de gaz libre.

2. Dispositif pour la mesure du point d'éclair de liquides et de matières solides dans une chambre de mesure qui est formée d'un récipient de mesure (1) et d'un couvercle (2) et qui est pourvue d'un dispositif d'allumage électrique (3), de capteurs de température (5,6), d'un dispositif de mesure de la pression (4) et d'un dispositif de pressage (8) pour assurer une liaison étanche entre le récipient de mesure (1) et le couvercle (2), caractérisé en ce que des moyens de chauffage du couvercle (2) sont prévus et le couvercle (2) est relié d'une manière séparable à un récipient de mesure (1) pouvant être soumis à une pression à partir du bas et contenant la substance à mesurer, récipient dont la température est plus basse que la température du couvercle (2).

3. Dispositif suivant la revendication 2 caractérisé en ce que le couvercle chauffable (2) comporte le dispositif d'allumage électrique (3), le dispositif de mesure de la pression (4) et deux capteurs de température (5,6) respectivement pour le couvercle (2) et le contenu de la chambre de mesure et en ce que le récipient de mesure (1) est monté de manière à pouvoir être séparé du couvercle (2) pour son vidage, son nettoyage et son remplissage.

4. Dispositif suivant l'une quelconque des revendications 2 ou 3 caractérisé en ce que le dispositif de mesure de la pression (4) est constitué, d'une manière connue en soi, d'un capteur de pression piézorésistif.